# EUROPÄISCHE PATENTANMELDUNG

(11) **EP 1 914 765 A2**
(43) Veröffentlichungstag der Anmeldung: **23.04.2008**
(21) Anmeldenummer: 07020055.5
(22) Anmeldetag: 12.10.2007
(51) Int. Cl.: H01G 9/20

(54) **Solarzelle**

(30) Priorität: 12.10.2006 DE 102006048408
(71) Anmelder: Fraunhofer-Gesellschaft zur Förderung der angewandten Forschung e.V., 80686 München (DE); Albert-Ludwigs-Universität Freiburg, 79085 Freiburg (DE); European Institute for Energy Research, 79131 Karlsruhe (DE)
(72) Erfinder: Würfel, Uli, 79100 Freiburg (DE); Peters, Marius, 79102 Freiburg (DE)
(74) Vertreter: Pfenning, Meinig & Partner GbR

(57) **Zusammenfassung**

Bei einer Solarzelle mit einer Einstrahlseite (40), und mit einer der Einstrahlseite gegenüberliegenden Rückseite sowie mit einer Halbleiterschicht (7) und mit einem Farbstoff, von dem aus Elektronen infolge einer Anregung durch Lichtabsorption in den Halbleiterwerkstoff injiziert werden können, und mit einer ersten und einer zweiten flächigen Elektrode (2b, 6), zwischen denen ein Elektrolyt (5) angeordnet ist, wobei die erste Elektrode (6) mit der Halbleiterschicht (7) leitend verbunden ist, ist zur Einsparung einer optisch transparenten und elektrisch leitfähigen Elektrodenschicht gemäß der Erfindung vorgesehen, dass die erste Elektrode (6) und die zweite Elektrode (2b) auf der der Einstrahlseite (40) abgewandten Seite der Halbleiterschicht (7) angeordnet ist.

## Beschreibung

Die Erfindung liegt auf dem Gebiet der photovoltaischen Solarzellen, d.h. Energieumwandlungszellen, in denen optische Strahlung in elektrischen Strom umgesetzt werden kann.

Standardmäßig sind die konventionellen Solarzellen aus Halbleitern, beispielsweise Silicium bekannt, die einen relativ hohen Wirkungsgrad aufweisen, jedoch in der Herstellung teuer sind.

Dagegen sind auch Farbstoffsolarzellen bekannt, bei denen Elektronen von Farbstoffmolekülen angeregt und in ein separates Halbleitermaterial injiziert werden. Derartige Farbstoffsolarzellen reichen zwar im Wirkungsgrad an die konventionellen Solarzellen nicht heran, jedoch sind sie kostengünstiger herzustellen und mit der Auswahl und der bestmöglichen Anpassung der Farbstoffe an das Spektrum des Sonnenlichts lassen sich die Wirkungsgrade noch weiter verbessern.

Insbesondere kann die Konkurrenzfähigkeit von Farbstoffsolarzellen jedoch durch weitere Verringerung des Preises gesteigert werden.

Die vorliegende Erfindung bezieht sich auf eine Solarzelle mit einer Einstrahlseite, die zur Einstrahlung von Licht vorgesehen ist, das in elektrische Energie umgesetzt werden soll und mit einer der Einstrahlseite gegenüberliegenden Rückseite sowie mit einer Halbleiterschicht und mit einem Farbstoff, von dem aus Elektronen infolge einer Anregung durch Lichtabsorption in die Halbleiterschicht injiziert werden können und mit einer ersten und einer zweiten flächigen Elektrode, zwischen denen ein Elektrolyt angeordnet ist, wobei die erste Elektrode mit der Halbleiterschicht leitend verbunden ist.

Derartige Solarzellen sind aus dem Stand der Technik, beispielsweise der EP 1 536 508 A1 bekannt. Bei einer derartigen bekannten Farbstoffsolarzelle ist beispielsweise eine monomolekulare Schicht von Farbstoffmolekülen chemisch an eine große Oberfläche eines porösen Halbleiters mit großem Bandabstand, beispielsweise Titandioxid gebunden. Der Halbleiter ist auf einem Substrat, beispielsweise aus Glas, aufgebracht, wobei dieses zunächst mit einer transparenten und elektrisch leitfähigen Schicht versehen ist. Als Material für diese Schicht wird beispielsweise Fluordotiertes Zinnoxid (FTO) oder Indiumzinnoxid (ITO) verwendet. Das beschichtete Glassubstrat stellt somit die erste Elektrode dar. Durch diese hindurch fällt das Licht auf den mit dem Farbstoff versehenen Halbleiter, wo entsprechend die in dem Farbstoff angeregten Elektronen in den Halbleiter injiziert werden.

Die Leitfähigkeit des Halbleiters reicht aus, um die Elektronen zu der ersten Elektrode zu führen, von wo aus diese zu der elektrischen Last geleitet werden, die außen an der Solarzelle anliegt.

Durch den geschlossenen Stromkreislauf wandern die Elektronen von der Last zu der zweiten Elektrode, die der ersten Elektrode unter Zwischenlage eines Elektrolyten gegenüberliegt. Der Elektrolyt enthält typisch Redox-Paare, beispielsweise Iodid (I⁻) und Triiodid (I⁻₃). An der zweiten Elektrode reduzieren die Elektronen das dort anstehende Triiodid zu Iodid. Das Iodid diffundiert innerhalb des Elektrolyten zur ersten Elektrode und zum Farbstoff und reduziert diesen. Damit ist der Stromkreislauf geschlossen.

Um die Reduktion des Iodids an der zweiten Elektrode effektiver zu machen, wird dort zusätzlich eine Katalysatorschicht aus Platin vorgesehen.

Ein sehr kostenintensiver Punkt bei dem beschriebenen Aufbau ist das Vorsehen einer optisch transparenten und elektrisch leitenden Schicht auf dem Glassubstrat unter der zu bestrahlenden Halbleiterschicht. Derartige Elektroden werden üblicherweise durch Aufdampfen, Sputtern sowie CVD- und PVD-Verfahren (Chemical Vapor Deposition/Physical Vapor Deposition) aufgebracht. Da dies ein sehr kostenintensiver Schritt ist, stellt die beschriebene Konstruktion der ersten Elektrode einen der teuersten Aspekte der bekannten Farbstoffsolarzellen dar.

Der vorliegenden Erfindung liegt die Aufgabe zugrunde, die Konstruktion der eingangs genannten Solarzelle zu verbessern, und sie weniger aufwendig und kostengünstiger zu gestalten.

Die Aufgabe wird erfindungsgemäß dadurch gelöst, dass die erste und die zweite Elektrode auf der der Einstrahlseite abgewandten Seite der Halbleiterschicht angeordnet sind.

Durch diese Konstruktion ist erreicht, dass die erste Elektrode zwar elektrisch leitfähig, jedoch nicht optisch transparent sein muss, da der Farbstoff, in dem die Lichtanregung stattfindet, in Bezug auf die Einstrahlseite vor der Elektrode liegt. Es muss lediglich gewährleistet sein, dass der halbleitende Werkstoff, in den die Elektronen injiziert werden, in elektrisch leitender Verbindung mit der ersten Elektrode steht und dass auf der anderen Seite die Ionen des Elektrolyten bzw. Löcher des organischen Lochleiters ihre Elektronen bzw. Löcher an die Farbstoffmoleküle abgeben können.

Hierzu ist vorteilhaft die erste Elektrode porös ausgebildet, so dass die Ionen im Elektrolyten und/oder Lochleiter durch die erste Elektrode hindurch und zum Farbstoff hin gelangen können.

Die erste Elektrode kann beispielsweise aus einem Sinterwerkstoff bestehen, aufgedampft, aufgesputtert oder durch Siebdruck aufgebracht werden. Die zweite Elektrode kann beispielsweise Metalloxid, Titan und/oder ein Polymer enthalten oder daraus bestehen.

Weiterhin kann es vorteilhaft vorgesehen sein, dass die zweite Elektrode mit einem Katalysator zur Reduktion eines Bestandteils des Elektrolyten in Verbindung steht. Als Material des Katalysators wird vorzugsweise Platin gewählt. Durch einen derartigen Katalysator wird beispielsweise, wenn der Elektrolyt das Redox-Paar Iodid und Triiodid enthält, die Reduktion von Triiodid zu Iodid deutlich beschleunigt. Damit wird die unter Stromfluss über dieser Elektrode (bzw. Grenzfläche Elektrode/Elektrolyt) abfallende Spannung (deutlich) verringert und damit die verfügbare Leistung der Solarzelle erhöht.

Die erste Elektrode kann vorteilhaft aus Titan bestehen, da dieser Werkstoff widerstandsfähig ist um auch den Bestandteilen des Elektrolyten chemisch zu widerstehen. Eine Titan- oder Nickelschicht als erste Elektrode weist zusätzlich einen hohen Durchtrittswiderstand in Bezug auf die Bestandteile des Elektrolyten auf, so dass Verlustreaktionen minimiert werden.

Es kann vorteilhaft als Träger für die Elektroden und den Elektrolyten bzw. Lochleiter sowie die übrigen Bestandteile der Solarzelle ein flexibles Substrat vorgesehen sein. Die Herstellung einer Solarzelle auf einem flexiblen Substrat ist grundsätzlich bereits aus der PCT-Patentanmeldung 03/065472 (STRUCTURES AND MATERIALS FOR DYE SENSITIZED SOLAR CELLS) bekannt. Dort ist das so genannte "roll-to-roll"-Verfahren beschrieben, bei dem ein flexibler Träger nach dem Abrollen von einer ersten Rolle und vor dem Aufrollen auf einer zweiten Rolle mit verschiedenen Stoffen beschichtet wird, um Solarzellen herzustellen. Mit einem derartigen flexiblen Träger und auch mit ähnlichen Herstellungsverfahren lassen sich auch die Ausgestaltungen der vorliegenden Erfindung realisieren.

Dabei können bei einem derartigen roll-to-roll-Verfahren zwei flexible Substrate auf den beiden Seiten der Solarzelle vorgesehen sein, um diese vollständig abzuschließen. In diesem Fall muss das auf der Einstrahlseite liegende Substrat optisch transparent ausgebildet werden, um die Lichtausbeute der Solarzelle nicht zu senken.

Um eine gegenseitige Kontaktierung der beiden Elektroden bei einer derartigen Ausgestaltung zu verhindern, wird vorteilhaft eine poröse Isolationsschicht zwischen der ersten und der zweiten Elektrode vorgesehen, die im Wesentlichen in den Elektrolyten eingebettet und von diesem durchdrungen ist. Das Vorhandensein dieser Isolationsschicht verhindert auch beim Biegen und Bewegen des Produkts, dass die Elektroden einander zu nahe kommen.

Die Isolationsschicht kann vorteilhaft aus Zirkondioxid bestehen.

Die Erfindung bezieht sich außerdem auf ein Verfahren zur Herstellung einer Solarzelle gemäß einem der Ansprüche 1 bis 14, wobei auf einen Träger eine Elektrodenschicht aufgebrächt wird,
diese flächig unterteilt wird in erste Bereiche, die mit der ersten Elektrode verbunden werden, und zweite Bereiche, die die zweite Elektrode bilden,
die zweiten Bereiche mit einem Katalysator verbunden werden,
danach eine poröse Isolationsschicht und darauf die erste Elektrode aufgebracht wird,
danach die Halbleiterschicht aufgebracht wird und danach der Elektrolyt zwischen die erste und die zweite Elektrode eingebracht wird.

Bis auf das Einbringen des Elektrolyten bzw. Lochleiters wird in dem erfindungsgemäßen Verfahren die Solarzelle von einer Seite her, d.h. von einem Träger her bis zur anderen Seite sukzessive aufgebaut. Lediglich der Elektrolyt bzw. Lochleiter wird später, beispielsweise durch Öffnungen im Träger eingebracht und auch der Farbstoff kann später in die Halbleiterschicht eingebracht werden.

Im Folgenden wird die Erfindung anhand eines Ausführungsbeispiels in einer Zeichnung gezeigt und anschließend beschrieben. Dabei zeigt
- Fig. 1: einen schematischen Aufbau der erfindungsgemäßen Solarzelle,
- Fig. 2: den bekannten Aufbau einer konventionellen Farbstoffsolarzelle, und
- Fig. 3: eine Farbstoffsolarzelle im monolithischen Aufbau.

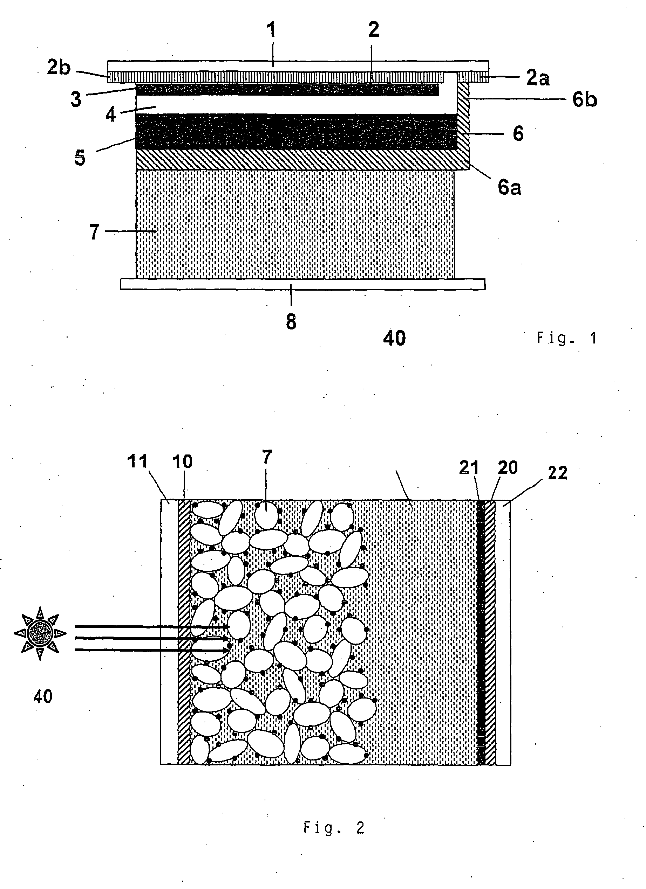

Zunächst soll anhand der Fig. 2 die Funktion der konventionellen Farbsolarzelle erläutert werden.

Eine monomolekulare Schicht Farbstoffmoleküle ist chemisch an die Oberfläche eines porösen Halbleiters mit großem Bandabstand, beispielsweise Titandioxid 7 gebunden. Das Titandioxid kann beispielsweise als Sinterkörper, als schwammartiger Körper oder als aus Nanopartikeln bestehendes Schüttgut vorliegen und an seiner Oberfläche mit dem Farbstoff bedeckt sein. Diese Halbleiterschicht ist unter Zwischenlage einer elektrisch leitfähigen und optisch transparenten Elektrode, der ersten Elektrode 10 auf ein Glassubstrat 11 aufgebracht. Die leitfähige Schicht kann beispielsweise aus fluordotiertem Zinnoxid bestehen.

Die Poren oder Zwischenräume des Titandioxids sind mit einem Elektrolyt gefüllt, der den Zwischenraum zwischen der ersten Elektrode 10 und der zweiten Elektrode 20 anfüllt. Die zweite Elektrode 20 besteht dabei vorzugsweise aus einem ähnlichen Werkstoff wie die erste Elektrode 10.

Zur Verringerung des Durch- oder Übertrittswiderstands ist auf die zweite Elektrode 20 noch eine Platinschicht als Katalysator aufgebracht, der die Reduktion des Triiodid zu Iodid beschleunigt.

Durch Bestrahlung der Farbstoffmoleküle mit Licht werden Elektronen der Farbstoffmoleküle angeregt und von dort in das Titandioxid injiziert. Von dort wandern die Elektronen zur Elektrode 10 und von dort in einen äußeren Verbraucher und wieder zurück zur zweiten Elektrode 20. Die Iodidionen wandern von dort mit der negativen Ladung zu den Farbstoffpartikeln. Damit ist der Stromkreislauf geschlossen.

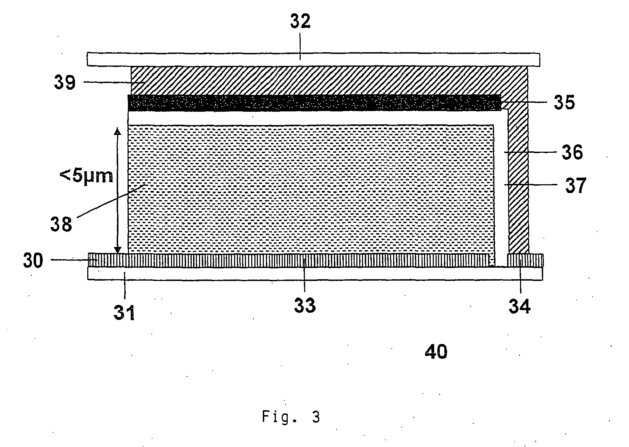

In diesem Zusammenhang soll auch noch der so genannte monolithische Aufbau, wie in Fig. 3 gezeigt, beschrieben werden. Es ist ein erstes Glassubstrat 31 auf der Einstrahlseite 40 der Farbstoffsolarzelle und ein zweites Substrat 32 auf der gegenüberliegenden Seite angeordnet. Anstelle von Glas kann hier auch ein flexibles durchsichtiges Kunststoffmaterial eingesetzt werden.

Direkt oberhalb (d.h. dem zweiten Substrat 32 zugewandt) der einstrahlseitigen Glasschicht 31 ist eine optisch durchsichtige, elektrisch leitfähige Elektrodenschicht 30 angeordnet, die einen ersten Bereich 33 aufweist, in dem sie die erste Elektrode bildet sowie einen zweiten Bereich 34, in dem sie den Anschluss für die zweite Elektrode 35 bildet, die mit den zweiten Bereichen 34 über Stege 36 verbunden ist.

Zwischen den beiden Elektroden 30, 35 ist ein poröser Zirkondioxidwerkstoff mit einem Elektrolyt 37 eingefügt. Zwischen dem Elektrolyten 37 und der ersten Elektrode 30 ist eine Titandioxidschicht 38 mit einem Farbstoff angeordnet. Zwischen der zweiten Elektrode 35 und dem Substrat 32 ist eine Graphitschicht 39 angeordnet. Wird in dem Farbstoff durch Lichteinstrahlung von der Einstrahlseite her ein Elektron angeregt, so wird dies in den Titandioxidwerkstoff injiziert und von dort über die erste Elektrode 30 zu einem Verbraucher geleitet. Von dort fließt das Elektron/die Ladung zurück bis zu der zweiten Elektrode 35, die mittels des Kontaktstegs 36 durch die zweiten Bereiche 34 kontaktiert ist. Dort reduziert die negative Ladung ein Triiodidion des Elektrolyten 37, der Iodid und Triiodid enthält. Das entsprechend reduzierte Teilchen (I⁻) wandert innerhalb des Elektrolyten zu der Titandioxidschicht 38, um eine dort eine Ladung an den Farbstoff abzugeben.

Durch die in der Fig. 3 dargestellte Konstruktion ist nur noch eine einzige Elektrodenschicht 33 notwendig, in der die erste Elektrode und die weiteren Bereiche 34 in derselben Fläche liegen und in einem einheitlichen Prozess bearbeitet werden können. Weitere teuer herzustellende Flächen mit einer entsprechend optisch transparenten und leitfähigen Beschichtung werden nicht benötigt. Der entscheidende Nachteil dieser Konstruktion ist jedoch, dass das Licht von der Einstrahlseite her zunächst noch die Schicht 33 durchlaufen muss, bevor sie zu dem Farbstoff gelangt, und dass auch die Herstellung einer einzigen entsprechend leitfähigen und optisch transparenten Schicht 33 einen erheblichen Kostenfaktor darstellt.

Die vorliegende Erfindung hat sich zum Ziel gesetzt, die teuren Schichten 10 und 20 der ersten und zweiten Elektrode in Fig. 2 kostengünstiger zu gestalten, indem diese nicht mehr optisch transparent zu sein brauchen. Näheres zu der Erfindung ist in der Fig. 1 dargestellt. Dort ist mit 1 und 8 das Substrat bezeichnet, das beispielsweise Glas, jedoch auch ein volldurchsichtiger und flexibler Kunststoff sein kann. Auf der Einstrahlseite, die in der Fig. 1 unten dargestellt ist, liegt hinter dem Substrat 8 direkt die poröse Titandioxidschicht 7 mit adsorbierten Farbstoffmolekülen. Dorthin gelangt eingestrahltes Licht, ohne weitere Barrieren passieren zu müssen.

Wird in dieser Schicht ein Elektron nach Anregung im Farbstoff in das Titandioxid injiziert, so gelangt das Elektron von dort durch die hinreichend gute elektrische Leitfähigkeit zu der ersten Elektrode 6. Diese ist in einem ersten Bereich 6a flächig ausgebildet und begrenzt den Raum des Elektrolyten 5. Die erste Elektrode 6 weist jedoch auch Arme oder Stege 6b auf, die diese mit ersten Bereichen 2a der Elektrodenschicht 2 verbinden. Zweite Bereiche 2b der Elektrodenschicht 2 bilden die zweite Elektrode. Die zweite Elektrode 2b ist mit einer Platinschicht 3 bedeckt, die als Katalysator für die elektrochemische Reaktion des Elektrolyten dient.

Mit 4 ist in der Figur eine Isolationsschicht bezeichnet, die verhindert, dass insbesondere bei flexiblen Substraten die Elektroden 2, 6a miteinander in Berührung kommen.

Sowohl das Material der ersten Elektrode als auch das der Elektrodenschicht 2 muss die Bedingung erfüllen, dass es dem Elektrolyten chemisch gut widersteht, ohne beispielsweise durch Korrosion Schaden zu nehmen. Zusätzlich muss das Material der ersten Elektrode noch über einen möglichst hohen Durchtrittswiderstand in Bezug auf den Elektrolyten verfügen, um die Verlustreaktionen zu minimieren. Dies ist beispielsweise der Fall, wenn als Material für die erste Elektrode Titan oder Nickel gewählt wird.

Werden die entsprechenden Stoffe mittels Siebdruck aufgebracht, so muss die Zelle vor dem Einbringen des Farbstoffs und dem Einfüllen des Elektrolyten gesintert werden. Typische Sintertemperaturen liegen für Titandioxid und Zirkondioxid bei ca. 450 bis 500°C. Wird eine aufgedampfte Schicht aus Titan für die erste Elektrode 2 verwendet, oder werden flexible Substrate aus Kunststoff eingesetzt, so müssen die Sintertemperaturen herabgesetzt werden. Eventuell müssen organische Bestandteile in der Siebdruckpaste angepasst werden.

Die typischen Herstellungsschritte für eine erfindungsgemäße Solarzelle stellen sich dar wie folgt:

Zunächst wird ein leitfähig beschichtetes Substrat 1 mittels eines Lasers strukturiert, d.h. es werden verschiedene Bereiche einer Elektrodenschicht 2 beispielsweise mittels eines Lasers voneinander getrennt.

Danach wird eine katalytische Schicht 3 für die Redoxreaktion des Elektrolyten aufgebracht (z.B. Platin). Die Schicht kann durch Siebdruck, Verdampfen oder Sputtern aufgebracht werden.

Danach wird die poröse Isolationsschicht 4 aufgebracht. Dies kann durch Siebdruck oder durch ein Tauchbad geschehen, ebenso wie durch Verdampfen oder Sputtern.

Danach wird die poröse leitfähige Schicht der ersten Elektrode 6 aufgebracht. Diese Schicht (z.B. Titan) kann aufgedampft, aufgesputtert oder durch Siebdruck aufgebracht werden.

Eine nanoporöse Titandioxidschicht wird beispielsweise durch Siebdruck oder ein Tauchbad oder mittels Dispensern auf die Elektrodenschicht 6a aufgebracht.

Danach kann das zweite Substrat 8 auf die Halbleiterschicht 7 aufgebracht und damit die beiden Substrate 1, 8 miteinander verbunden und versiegelt werden.

Die Titandioxidschicht wird durch Einbringen eines Farbstoffes gefärbt und ein Elektrolyt 5 wird durch Löcher im Substrat 8 eingefüllt, worauf die entsprechenden Löcher versiegelt werden.

Durch die beschriebene Konstruktion und den Herstellungsprozess wird die Konstruktion der Solarzelle gegenüber dem Stand der Technik einfacher, robuster und kostengünstiger.

## Patentansprüche

1. Solarzelle mit einer Einstrahlseite (40), die zur Einstrahlung von Licht vorgesehen ist, das in elektrische Energie umgewandelt werden soll und mit einer der Einstrahlseite gegenüberliegenden Rückseite sowie mit einer Halbleiterschicht (7), und mit einem Farbstoff, von dem aus Elektronen infolge einer Anregung durch Lichtabsorption in die Halbleiterschicht (7) injiziert werden, und mit einer ersten und einer zweiten flächigen Elektrode (2b, 6), zwischen denen ein Elektrolyt und/oder organischer Lochleiter (5) angeordnet ist, wobei die erste Elektrode (6) mit der Halbleiterschicht (7) leitend verbunden ist,
**dadurch gekennzeichnet, dass** die erste (6) und die zweite Elektrode (2b) auf der der Einstrahlseite (40) abgewandten Seite der Halbleiterschicht (7) angeordnet sind.

2. Solarzelle nach Anspruch 1, **dadurch gekennzeichnet, dass** die erste Elektrode (6) porös ist.

3. Solarzelle nach Anspruch 1 oder 2, **dadurch gekennzeichnet, dass** die erste Elektrode (6) von dem Elektrolyten und/oder dem organischen Lochleiter (5) durchsetzt ist.

4. Solarzelle nach einem der Ansprüche 1 bis 3, **dadurch gekennzeichnet, dass** der Farbstoff mit dem Elektrolyten und/oder dem organischen Lochleiter (5) in Verbindung steht.

5. Solarzelle nach einem der vorhergehenden Ansprüche, **dadurch gekennzeichnet, dass** die zweite Elektrode (2b) mit einem Katalysator (3) zur Reduktion eines Bestandteils des Elektrolyten (5) in Verbindung steht.

6. Solarzelle nach Anspruch 5, **dadurch gekennzeichnet, dass** der Katalysator (3) aus Platin, Graphit, Ruß, Molybdänoxid, Nickeloxid, Ceriumoxid oder einem anderen Metalloxid oder PEDOT (Polyethylendioxithiophen) besteht.

7. Solarzelle nach einem der vorhergehenden Ansprüche, **dadurch gekennzeichnet, dass** die Halbleiterschicht (7) aus gesintertem Titandioxid oder Zinkoxid besteht.

8. Solarzelle nach einem der vorhergehenden Ansprüche, **dadurch gekennzeichnet, dass** der Elektrolyt (5) Redox-Paare enthält.

9. Solarzelle nach Anspruch 8, **dadurch gekennzeichnet, dass** der Elektrolyt (5) Jodid (I⁻) und Trijodid (I⁻₃) enthält.

10. Solarzelle nach einem der vorhergehenden Ansprüche, **dadurch gekennzeichnet, dass** die erste Elektrode (6) eine Titan- oder Nickelschicht aufweist.

11. Solarzelle nach einem der vorhergehenden Ansprüche, **dadurch gekennzeichnet, dass** als Träger für die Elektroden (2b, 6), den Elektrolyten und/oder dem organischen Lochleiter (5), die Halbleiterschicht (7) und den Farbstoff wenigstens ein flexibles Substrat (1, 8) vorgesehen ist.

12. Solarzelle nach Anspruch 11, **dadurch gekennzeichnet, dass** zwei flexible Substrate (1, 8) vorgesehen sind, von denen eines (8) von der Halbleiterschicht (7) aus gesehen auf der Einstrahlseite (40) liegt und optisch transparent ist.

13. Solarzelle nach einem der vorhergehenden Ansprüche, **dadurch gekennzeichnet, dass** zwischen der ersten und der zweiten Elektrode (2b, 6) eine poröse Isolationsschicht (4) angeordnet ist.

14. Solarzelle nach Anspruch 13, **dadurch gekennzeichnet, dass** die poröse Isolationsschicht (4) aus Zirkoniumdioxid, Siliciumoxid und/oder Aluminiumoxid besteht.

15. Verfahren zur Herstellung einer Solarzelle gemäß einem der Ansprüche 1 bis 14,
**dadurch gekennzeichnet, dass**
auf ein Substrat (1) eine zweite Elektrodenschicht (2b) aufgebracht wird,
auf die zweite Elektrodenschicht (2b) bezüglich Elektronen- oder Lochleitung isoliert von der zweiten Elektrodenschicht (2b) eine erste Elektrodenschicht (6a) aufgebracht wird,
auf die erste Elektrodenschicht (6a) mit dieser elektrisch leitend verbunden eine Halbleiterschicht (7) aufgebracht wird,
wobei in oder an der Halbleiterschicht (7) ein Farbstoff angeordnet ist, von dem aus Elektronen infolge einer Anregung durch Lichtabsorption in die Halbleiterschicht (7) injizierbar sind und
zwischen der ersten Elektrodenschicht (6) und der zweiten Elektrodenschicht (2b) ein Elektrolyt und/oder organischer Lochleiter angeordnet ist.

16. Verfahren nach dem vorhergehenden Anspruch, **dadurch gekennzeichnet,**
**dass** auf das erste Substrat (1) eine Elektrodenschicht (2) aufgebracht wird,
**dass** diese flächig unterteilt wird in erste Bereiche (2a), die mit der ersten Elektrode (6) verbunden werden und zweite Bereiche (2b), die die zweite Elektrode (2b) bilden.

17. Verfahren nach dem vorhergehenden Anspruch, **dadurch gekennzeichnet, dass**
dass unmittelbar auf die zweiten Bereiche (2b) eine Katalysatorschicht (3) aufgebracht wird.

18. Verfahren nach einem der drei vorhergehenden Ansprüche, **dadurch gekennzeichnet, dass** der Elektrolyt (5) durch Öffnungen in dem Träger/Substrat eingebracht wird, die danach verschlossen werden.
